# EUROPEAN PATENT SPECIFICATION

(11) **EP 4 065 976 B1**
(45) Date of publication and mention of the grant of the patent: **24.06.2026**
(21) Application number: 20803409.0
(22) Date of filing: 21.10.2020
(51) Int. Cl.: G01N 31/22, G01N 21/78

(54) **CHEMICAL INDICATOR AND PROCESS FOR CONDUCTING A VAPOROUS HYDROGEN PEROXIDE STERILIZATION**
CHEMISCHER INDIKATOR UND VERFAHREN ZUR STERILISATION UNTER VERWENDUNG VON WASSERSTOFFPEROXID-DAMPF
INDICATEUR CHIMIQUE ET PROCÉDÉ POUR EFFECTUER UNE STÉRILISATION À L'AIDE DE PEROXYDE D'HYDROGÈNE VAPOREUX

(30) Priority: 25.11.2019 US 201962939707 P
(43) Date of publication of application: 05.10.2022
(73) Proprietor: American Sterilizer Company, Mentor, OH 44060 (US)
(72) Inventor: FIX, Kathleen A., Willoughby, Ohio 44094 (US)
(74) Representative: FRKelly
(86) International application number: PCT/US2020/056570
(87) International publication number: WO 2021/108045

(56) References cited:
- WO-A1-2015/112679
- WO-A1-2017/112562
- US-A- 3 981 683
- US-A- 4 353 990
- US-A- 5 378 430

## Description

### Technical Field

This invention relates to chemical indicators and, more particularly, to moving front chemical indicators for determining whether appropriate sterilization parameters are met using vaporous hydrogen peroxide (VHP) sterilization processes.

### Background of the Invention

There are multiple types of chemical indicators used to determine whether or not appropriate sterilization parameters are met by a sterilization process. Type 1 indicators show simply that the item has been processed by the sterilization process. Type 2 indicators are specialized devices, used to indicate proper operation of the sterilizer. Type 3 indicators react to a single parameter (e.g., temperature). Type 4 indicators react to two or more parameters (e.g., temperature and time). Type 5 indicators react to all appropriate parameters of the sterilization process and are correlated with the results for a biological indicator (BI) used to monitor the sterilization process. Type 5 indicators are also known as integrating indicators. Type 6 indicators are emulators and target a specific sterilization cycle.

### Summary of the Invention

The desired parameters to observe for VHP sterilizations are hydrogen peroxide concentration, temperature, time, and plasma presence (if applicable). The sterilization device, its parameters, and the sterilant used to sterilize articles with VHP has made it difficult to produce certain types of chemical indicators for the sterilization device. The interior of the sterilization device (chamber where sterilization takes place) is subjected to multiple atmospheric and vacuum cycles, humidity and sterilant concentration changes. Moving front chemical indicators are chemical indicators that comprise a dye composition positioned on a strip of wicking material, wherein the dye composition wicks along the strip of wicking material and changes color in response to changes in one or more parameters of a sterilization process (e.g., time, temperature, etc.). At present, no moving front chemical indicators are available for VHP sterilization processes. Type 1, 3, and 4 indicators are currently used for VHP processes. No Type 5 or 6 chemical indicators are available for VHP sterilization processes.

Moving front chemical indicators for steam sterilization are available. These chemical indicators employ dye compositions that are solid at room temperature and melt under conditions of high temperature and humidity. These compositions include salicylamide, ethoxy benzamide, and a mixture of 2-ethoxy-3'-chloro-N, N-diphenylurea and 1,4,5,8-tetra-aminoanthraquinone. These steam sterilization indicators also use colored dyes to make the front visible to users, a wicking material for front movement, and various binders for stability. The melting points of these components (121°C-135°C) are not amenable to use in a lower temperature (45°C-65°C) VHP sterilization processes. These low temperature requirements make it difficult to find appropriate matrices for the VHP chemical indicators. Also, shipping and handling of such chemical indicators for VHP processing is problematic (consider Phoenix, Arizona in summer).

Other moving front chemical indicators for sterilization are known from US 3981683 A or US 5 378 430 A.

In addition, the oxidative nature of hydrogen peroxide presents challenges in chemical indicator manufacture (no cellulosics for wicking or other indicator components due to flammability considerations) and the potential for dyes that might be used to show the movement of the front is limited (hydrogen peroxide has a bleaching effect).

The problem, therefore, is to provide a suitable chemical indicator to monitor the progress of a VHP sterilization process. This problem is solved with this invention. This invention relates to a chemical indicator, comprising: a non-cellulosic backing layer; a non-cellulosic cover layer overlying the backing layer; the backing layer and/or the cover layer comprising a gas permeable polymeric film; a non-cellulosic wicking strip positioned between the backing layer and the cover layer; a dye composition positioned between the backing layer and the cover layer and in contact with or nearly in contact with the wicking strip, the dye composition comprising an indicator dye which changes color in the presence of hydrogen peroxide, and a base medium, which melts at a temperature in the range from about 45°C to about 65°C; the cover layer including a transparent portion to permit observation of the wicking strip; and an adhesive for adhering the cover layer to the backing layer. The chemical indicator of the present invention is defined in claim 1. This chemical indicator may be referred to as a moving front chemical indicator.

### Brief Description of the Drawings

In the annexed drawings, like parts and like features have like designations.

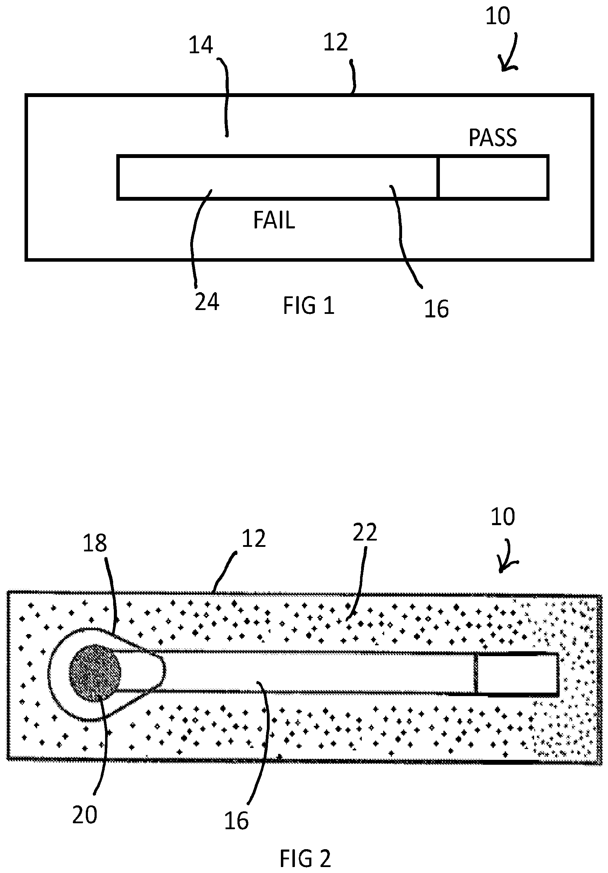

Fig. 1 is a plan view of a moving front chemical indicator in accordance with an embodiment of the present invention, the chemical indicator including a cover layer, a backing layer, a non-cellulose wicking material in the form of a rectangular strip, and a dye composition in the form of a pellet, the cover layer including a transparent portion which allows for visual observation of the wicking material.
Fig. 2 is a plan view of the chemical indicator shown in Fig. 1 with the cover layer removed.

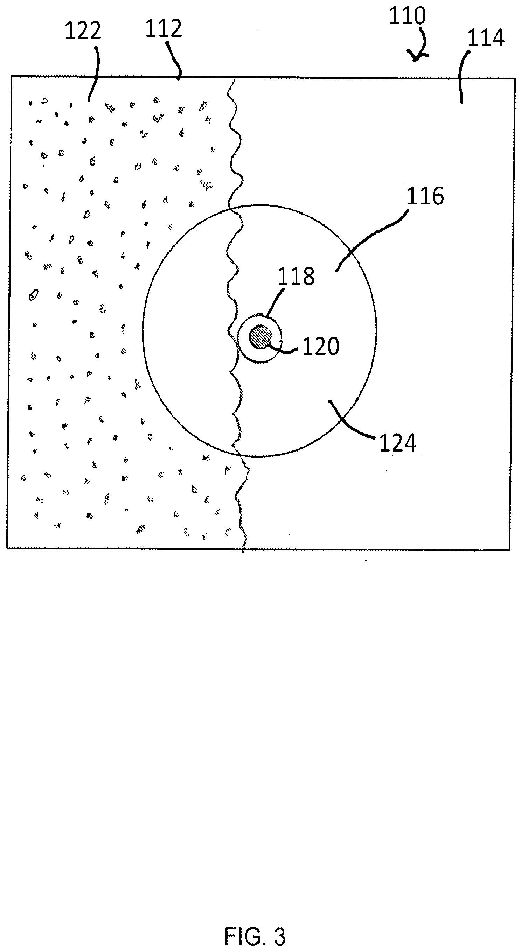

Fig. 3 is a plan view of a moving front chemical indicator in accordance with an alternative embodiment of the present invention, the chemical indicator including a cover layer which is partially cut away for illustrative purposes, a backing layer, a non-cellulose wicking material in the form of a circular layer, and a dye composition in the form of a pellet, the cover layer including a transparent portion which allows for visual observation of the wicking material.

### Detailed Description

The term "sterilization" is often taken to refer to a process wherein a total absence of living test organisms is achieved. However, this term is also used herein to refer to processes that are less rigorous than sterilization processes. These may include, for example, disinfection, sanitization, decontamination, cleaning, and the like. The sterilant used in the sterilization process comprises vaporous hydrogen peroxide (VHP).

Referring to Figs. 1 and 2, chemical indicator 10 includes backing layer 12 and cover layer 14 which overlies and is adhered to backing layer 12. Wicking material 16, which is in the form of a rectangular strip, is positioned between the backing layer 12 and cover layer 14. The backing layer 12 includes depression 18. A dye composition in the form of a pellet 20 is positioned in depression 18. The dye composition comprises an indicator dye, optionally a contrast dye, and a base medium. The dye composition is adapted to wick onto and along wicking material 16 in response to the melting of the base medium. Adhesive layer 22 is positioned between backing layer 12 and cover layer 14 and adheres cover layer 14 to backing layer 12. Cover layer 14 includes transparent portion 24 which allows for observation of the wicking material 16. The cover layer 14 includes the markings "FAIL" and "PASS" to indicate whether the VHP sterilization process being observed has failed or passed as evidenced by the change in color of the indicator dye. The cover layer 14 may also include other indicia.

An alternative embodiment of the chemical indicator is shown in Fig. 3. Referring to Fig. 3, chemical indicator 110 includes backing layer 112 and cover layer 114 which overlies and is adhered to backing layer 112. In Fig. 3, cover layer 114 is partially cut away for illustrative purposes. In actual use cover layer 114 would extend over the entire length and width of backing layer 112. The backing layer 112 includes depression 118. Wicking material 116 is positioned between the backing layer 112 and cover layer 114. A dye composition in the form of a pellet 120 is positioned in depression 118. The dye composition comprises an indicator dye, optionally a contrast dye, and a base medium. The dye composition is adapted to wick onto and along wicking material 116 in response to the melting of the base medium. Adhesive layer 122 is positioned between backing layer 112 and cover layer 114 and adheres cover layer 114 to backing layer 112. Cover layer 114 includes a transparent portion 124 which allows for observation of the wicking material 116. The cover layer 114 may include the markings "FAIL" and "PASS" to indicate whether the VHP sterilization process being observed has failed or passed as evidenced by the change in color of the indicator dye. The cover layer 114 may also include other indicia.

The backing layer 12 or 112 may be constructed of a metal foil, for example, an aluminum foil such as a dead soft aluminum, or a non-cellulosic polymeric film, for example, a polyolefin, polyester, polyamide, vinyl chloride polymer, polyacrylate, polycarbonate, or a mixture of two or more thereof. The polymeric film may comprise a polyethylene, polypropylene, polyethylene terephthalate, copolymers of polyethylene terephthalate, polybutylene terephthalate, polyvinyl chloride, polyvinylidene fluoride, ethylene vinyl alcohol, ethylene vinyl acetate, polychloroprene, polyisoprene, polytetrafluoroethylene, poly (trifluorochloroethylene), polymethacrylate, poly (meth) methacrylate, or a mixture of two or more thereof. The polymeric film may comprise mylar. The backing layer 12 may have any desired length and width. The length of the backing layer 12 may be in the range from about 2 to about 15 centimeters (cm), or from about 5 to about 10 cm. The width of the backing layer 12 may be in the range from about 0.5 to about 10 cm, or about 2.5 to about 7.5 cm. The backing layer 112 may be in the form of a square with each side having a length in the range from about 2 to about 10 cm, or from about 5 to about 10 cm. The backing layer 12 or 112 may have a thickness in the range from about 25 to about 1300 micrometers, or from about 75 to about 250 micrometers.

The cover layer 14 or 114 may comprise a non-cellulosic, transparent polymeric film. The cover layer 14 or 114 may include an opaque coating or film layer adhered to it. The cover layers 14 and 114 include transparent portions 24 and 124, respectively, which allow for visual observation of the wicking materials 16 and 116. The opaque film layer or coating may include various indicia thereon, for example, the words "PASS" and "FAIL" as indicated above. The polymeric film used as the cover layer 14 or 114 may comprise a polyolefin, polyester, polyamide, vinyl chloride polymer, polyacrylate, polycarbonate, or a mixture of two or more thereof. The polymeric film may comprise a polyethylene, polypropylene, polyethylene terephthalate, copolymers of polyethylene terephthalate, polybutylene terephthalate, polyvinyl chloride, polyvinylidene fluoride, ethylene vinyl alcohol, ethylene vinyl acetate, polychloroprene, polyisoprene, polytetrafluoroethylene, poly (trifluorochloroethylene), poly methacrylate, poly (meth) methacrylate, or a mixture of two or more thereof. The cover layer 14 or 114 may comprise polypropylene. The cover layer 14 may have any desired length and width. The length may be in the range from about 2 to about 15 cm, or from about 5 to about 10 cm. The width may be in the range from about 0.6 to about 10 cm, or about 2.5 to about 7.6 cm. The cover layer 114 may be in the form of a square with each side having a length in the range from about 2 to about 10 cm, or from about 5 to about 10 cm. The cover layers 14 and 114 may have thicknesses in the range from about 10 to about 250 micrometers, or from about 25 to about 75 micrometers.

The backing layers 12 and 112 and/or the cover layers 14 and 114 may be sufficiently gas permeable to permit VHP to penetrate the backing layer 12 or 112 and/or cover layer 14 or 114 and contact the wicking material 16 or 116.

The adhesive layer 22 or 122 may comprise an acrylic adhesive.

The pellet 20 or 120 may have any desired shape, for example, spherical, cylindrical, etc. and may comprise a base medium in which an indicator dye and optionally a contrast dye reside. The mass of the pellet 20 or 120 may be from about 20 to about 1000 milligrams (mg), or from about 40 to about 250 mg.

The base medium advantageously melts at a temperature in the range from about 45°C to about 65°C. The base medium may comprise polyethylene glycol (PEG) of molecular weight from about 1000 to about 4000, polyethylene glycol monomethyl ether (PEGMME) of molecular weight of about 1900. The base medium may comprise deep eutectic solids (DES), natural DES, ionic liquids, and other low melting point polymers (e.g., thermoplastic polymers). Waxes which melt in the above-indicated temperature range may be used.

The indicator dye may comprise a redox indicator which reacts and changes color in the presence of VHP. These dyes may include lissamine green. Lissamine green turns pale to colorless in the presence of VHP. Other redox indicating materials that may be used include resazurin, resorufin, diphenylamine sulfonate, diphenylamine, nitrodiphenylamine, methyl orange, neutral red, methylene blue, crystal violet, iron(II) phenanthroline, and thionine. Mixtures of two or more of the foregoing may be used. The concentration of the indicator dye in the pellet 20 or 120 may be from about 0.05 to about 5 mg per gram of base medium, or from about 0.5 to about 2 mg per gram.

The contrast dye provides an indication that exposure to VHP has been achieved and shows a color that is not indicative of lissamine green. The contrast dye may comprise phenol red or metacresol purple. Other contrast dyes that may be used to contrast against the original color of lissamine green may include bromophenol blue, thymolphthalein, bromothymol blue, thymol blue, bromocresol purple, malachite green oxalate or other indicators that may show a red/pink to yellow coloration in the base medium. The concentration of the contrast dye in the pellet 20 or 120 may be from about 0.05 to about 5 mg per gram of base medium, or from about 0.5 to about 2 mg per gram.

A useful dye composition may comprise about 2 mg of lissamine green, about 5 mg of phenol red or M-cresol purple, and about 5g of PEG (molecular weight of about 1500 to about 2000) as the base medium.

The wicking material of the present invention may comprise a non-cellulose porous material that is capable of wicking a liquid by capillary action. According to the present invention the non-cellulosic wicking material 16 or 116 comprises nylon, polyethersulfone (PES), polyvinylidene fluoride (PVDF), Teflon (polytetrafluoroethylene), or a mixture of two or more thereof. Cellulosic materials are avoided due to adverse reactions (potential flammability issues) to VHP. The wicking material 16 may be in the form of a rectangular strip with a length in the range from about 0.6 to about 13 cm, or from about 2.5 to about 9 cm, and a width in the range from about 0.3 to about 1.5 cm, or from about 0.3 to about 1 cm. The wicking material 116 may be in the form of a circular layer with a diameter in the range from about 2 to about 10 cm, or from about 5 to about 10 cm. The wicking material 16 or 116 may have a thickness in the range from about 5 to about 500 micrometers, or from about 50 to about 250 micrometers. The wicking material 16 or 116 may have an average pore size in the range from about 0.1 to about 5 micrometers, or from about 0.1 to about 3 micrometers, or from about 0.1 to about 1 micrometers, from about 0.1 to about 0.7 micrometers, or about 0.2 to about 0.6 micrometers, or about 0.3 to about 0.5 micrometers, or about 0.4 to about 0.5 micrometers, or about 0.45 micrometers.

The wicking material 16 or 116 is placed in contact with or nearly in contact with the pellet 20 or 120, respectively. In use, the pellet 20 or 120 is melted. The wicking material 16 or 116 absorbs the melted dye composition and carries the dye composition along the wicking material 16 or 116 so long as the temperature is high enough (i.e., about 45°C to about 65°C). The time required for the dye composition to move a certain fixed distance, for example, from "FAIL" to "PASS," and to change color is dependent on temperature and hydrogen peroxide concentration. Once the dye composition has reached a certain distance, for example, "PASS" as indicated in Fig. 1, and the color has changed to a predetermined color, it is assumed that the environment being tested has undergone a desired level of sterilization, for example, the probability that all of the microbes in the environment being tested (e.g., a sterilization chamber) have been killed is, for example, 0.99999.

The chemical indicator 10 or 110 may be used in a VHP sterilization process to indicate whether desired sterilization parameters of temperature and VHP concentration have been achieved. The article to be sterilized, for example, a medical device, and the chemical indicator 10 or 110 are placed in a VHP sterilization unit and subjected to VHP sterilization. The sterilization unit may be a VPro 60, VPro Max or a VPRO S2 sterilizer, each of which is available from STERIS. The sterilization unit may also be a STERRAD 100 or STERRAD 100NX available from American Sterilization Products.

Current chemical indicators for VHP sterilization processes are static, color changing devices. In contrast, the chemical indicator provided for herein is a moving front chemical indicator. The ability of an indicator to show a moving front response to multiple factors of the VHP sterilization process reduces the need for interpretation by end users and allows for the possibility of Type 5 or Type 6 chemical indicators.

### Examples

Prototype chemical indicators are made by cutting slices of wicking material of the appropriate composition and tacking them onto a polyester surface with rubber cement. The wicking material is a polyethersulfone (PES) filter material with an average pore size of 0.45 micrometers. A small quantity (approximately 60 mg) of a dye composition comprising a base medium and an indicator dye and optionally a contrast dye is dripped onto the end edge of the wicking material and allowed to dry. These samples are subjected to VHP lumen or non-lumen cycles in either a VPro 60 or VProMax VHP sterilizer. Color changes and distance traveled are measured. Samples are also exposed to a dry heat oven for the same time period as a VHP lumen cycle (about 55 minutes). The formulations that are tested are shown in Table I. The movement results of the directed flow runs are shown in Table 2.

**Table 1**

| Formulation Number | Indicating dye | Contrast dye | Base medium | Color |
|---|---|---|---|---|
| 1 | Lissamine Green, 2mg | Bromothymol Blue, 7.5mg | PEG2000, 5g | Green |
| 2 | Lissamine Green, 3.2mg | Phenol Red, 5.0mg | PEG2000, 5g | Green |
| 3 | Lissamine Green, 2.7mg | Thymol Blue, Na salt, 4.7mg | PEG2000, 5g | Dk. Blue |
| 4 | Lissamine Green, 3.1mg | Thymolphthalein, 4.8mg | PEG2000, 5g | Green |
| 5 | Lissamine Green, 3.5mg | M-cresol Purple, Na Salt, 4.8mg | PEG2000, 5g | Green |
| 6 | Lissamine Green, 2.7mg | Bromophenol Blue, 7.8mg | PEG2000, 5g | Dk. Blue |
| 7 | Resazurin, 5mg | none | PEG1500, 5g | Dark blue |
| 8 | Diphenylamine sulfonate, 6.7mg | Phenol Red, 5mg | PEG1500, 6.7g | Yellow |
| 9 | Lissamine Green, 2mg | Phenol Red, 5mg | PEG1500, 5g | Dark Teal |
| 10 | Lissamine Green, 5mg | Bromocresol Purple, 5mg | PEG1500, 5g | Dark Teal |
| 11 | Lissamine Green, 7mg | M-cresol Purple, 5mg | PEGMME 1900, 5g | Dark Teal |
| 12 | Lissamine Green, 2.1mg | Malachite Green Oxalate, 10.6mg | PEGMME 1900, 2.49g plus PEG1500, 2.49g | Blue |
| 13 | Lissamine Green, 2mg | none | PEG2000, 5g | Blue |

**Table 2**

| Test Number | Formulation Number | Cycle Type | Substrate | Distance traveled | Color change |
|---|---|---|---|---|---|
| A | 1 | Oven, 55 min, 50°C | PES | NA | Green |
| | 2 | Oven, 55 min, 50°C | PES | NA | Green |
| | 3 | Oven, 55 min, 50°C | PES | NA | Green |
| | 4 | Oven, 55 min, 50°C | PES | NA | Lt. Blue |
| | 5 | Oven, 55 min, 50°C | PES | NA | Green |
| | 6 | Oven, 55 min, 50°C | PES | NA | Blue |
| | 1 | Lumen, 55 min | PES | - | Yellow |
| | 2 | Lumen, 55 min | PES | 2.4 cm | Yellow |
| | 3 | Lumen, 55 min | PES | 2.8 cm | Yellow |
| | 4 | Lumen, 55 min | PES | 2.4 cm | - |
| | 5 | Lumen, 55 min | PES | 2.7 cm | Yellow |
| | 6 | Lumen, 55 min | PES | 2.4 cm | Blue |
| B | 1 | Non-Lumen, 28 min | PES | 1.8 cm | Yellow |
| | 2 | Non-Lumen, 28 min | PES | 1.4 cm | Yellow |
| | 3 | Non-Lumen, 28 min | PES | 2.1 cm | Yellow |
| | 4 | Non-Lumen, 28 min | PES | 1.1 cm | Gold |
| | 5 | Non-Lumen, 28 min | PES | 1.9 cm | Yellow |
| | 6 | Non-Lumen, 28 min | PES | 1.4 cm | Dk. Blue |
| C | 7 | Lumen | PES | 2.1 cm | none |
| | 8 | Lumen | PES | 1.8 cm | none |
| D | 7 | Non-lumen | PES | 2.5 cm | none |
| E | 9 | Lumen | PVDF | 1.1 cm | Yellow |
| | 10 | Lumen | PVDF | 1cm | Yellow green |
| | 11 | Lumen | PVDF | 1cm | Yellow |
| | 12 | Lumen | PVDF | 1.1 cm | Colorless |
| | 9 | Lumen | PES | 1cm | Yellow |
| | 10 | Lumen | PES | 1.7 cm | Yellow green |
| | 11 | Lumen | PES | 1cm | Yellow |
| | 12 | Lumen | PES | 1.5 cm | Colorless |
| | 13 | Lumen | PES | 1.5 cm | Colorless |
| F | 9 | Lumen | PES | 1.7 - 2 cm | Yellow |
| | 9 | Lumen | PES | 1.5 cm | Yellow |

A useful indicator comprises 2 mg of lissamine green and 5 mg of phenol red or m-cresol purple in combination with 5 grams of a PEG-containing base medium.

The formulations disclosed above are suitable for use in a Type 5 or Type 6 VHP indicator.

While the invention has been explained in relation to various embodiments, it is to be understood that various modifications thereof will become apparent to those skilled in the art upon reading the specification. Therefore, it is to be understood that the invention disclosed herein includes any such modifications that may fall within the scope of the appended claims.

## Claims

1. A chemical indicator, comprising:
a non-cellulosic backing layer;
a non-cellulosic cover layer overlying the backing layer;
the backing layer and/or the cover layer comprising a gas permeable polymeric film;
a non-cellulosic wicking material positioned between the backing layer and the cover layer, wherein the wicking material comprises nylon, polyethersulfone, polyvinylidene fluoride, polytetrafluoroethylene, or a mixture of two or more thereof;
a dye composition positioned between the backing layer and the cover layer and in contact with or nearly in contact with the wicking material, the dye composition comprising an indicator dye which changes color in the presence of hydrogen peroxide, and a base medium, which melts at a temperature in the range from about 45°C to about 65°C;
the cover layer including a transparent portion to permit observation of the wicking material; and
an adhesive for adhering the cover layer to the backing layer.

2. The chemical indicator of claim 1 wherein the backing layer includes a depression for receiving the wicking material and the dye composition.

3. The chemical indicator of any one of the preceding claims, wherein the backing layer comprises a metallic foil, a polyolefin, polyester, polyamide, vinyl chloride polymer, polyacrylate, polycarbonate, or a mixture of two or more thereof, optionally wherein the backing layer comprises polyethylene, polypropylene, polyethylene terephthalate, copolymers of polyethylene terephthalate, polybutylene terephthalate, polyvinyl chloride, polyvinylidene fluoride, ethylene vinyl alcohol, ethylene vinyl acetate, polychloroprene, polyisoprene, polytetrafluoroethylene, poly (trifluorochloroethylene), polymethacrylate, poly (meth) methacrylate, aluminium foil, or a mixture of two or more thereof.

4. The chemical indicator of any of the preceding claims, wherein the cover layer comprises a polyolefin, polyester, polyamide, vinyl chloride polymer, polyacrylate, polycarbonate, or a mixture of two or more thereof, optionally wherein the cover layer comprises polyethylene, polypropylene, polyethylene terephthalate, copolymers of polyethylene terephthalate, polybutylene terephthalate, polyvinyl chloride, polyvinylidene fluoride, ethylene vinyl alcohol, ethylene vinyl acetate, polychoroprene, polyisoprene, polytetrafluoroethylene, poly (trifluorochloroethylene), polymethacrylate, poly (meth) methacrylate, or a mixture of two or more thereof, optionally wherein the cover layer comprises polypropylene.

5. The chemical indicator of any one of the preceding claims wherein the backing layer is gas permeable to permit vaporous hydrogen peroxide to pass through the backing layer and contact the wicking material, and/or
wherein the cover layer is gas permeable to permit vaporous hydrogen peroxide to pass through the cover layer and contact the wicking material.

6. The chemical indicator of any one of the preceding claims wherein the base medium comprises polyethylene glycol, polyethylene glycol monomethyl ether, a eutectic solid, an ionic liquid, a wax, a thermoplastic polymer, or a mixture of two or more thereof.

7. The chemical indicator of any one of the preceding claims wherein the indicator dye comprises a redox indicator which reacts in the presence of hydrogen peroxide, optionally wherein the indicator dye comprises lissamine green, resazurin, resorufin, diphenylamine sulfonate, diphenylamine, nitrodiphenylamine, methyl orange, neutral red, methylene blue, crystal violet, iron(II) phenanthroline, thionine, or a mixture of two or more thereof.

8. The chemical indicator of any one of the preceding claims wherein the dye composition further comprises a contrast dye.

9. The chemical indicator of claim 8 wherein the contrast dye comprises phenol red, metacresol purple, bromophenol blue, thymolphthalein, bromothymol blue, thymol blue, bromocresol purple, malachite green oxalate, or a mixture of two or more thereof.

10. The chemical indicator of any one of the preceding claims wherein the dye composition is in the form of a pellet.

11. The chemical indicator of any one of the preceding claims wherein the wicking material has an average pore size in the range from about 0.1 to about 5 micrometers, or from about 0.1 to about 3 micrometers, or from about 0.1 to about 1 micrometers, or from about 0.1 to about 0.7 micrometers, or about 0.2 to about 0.6 micrometers, or about 0.3 to about 0.5 micrometers, or from about 0.4 to about 0.5 micrometers, or about 0.45 micrometers.

12. The chemical indicator of any one of the preceding claims wherein the wicking material is in the form of a rectangular strip or a circular layer.

13. The chemical indicator of any one of the preceding claims wherein upon exposure of the chemical indicator to vaporous hydrogen peroxide at a temperature in the range from about 45°C to about 65°C, the base medium melts and the dye composition wicks along the wicking strip and changes color in response to exposure to the vaporous hydrogen peroxide.

14. The chemical indicator of any one of the preceding claims wherein the chemical indicator is a moving front chemical indicator.

15. A process for conducting a vaporous hydrogen peroxide sterilization process, comprising:
exposing an article to be sterilized and the chemical indicator of any one of the preceding claims to vaporous hydrogen peroxide at a temperature in the range from about 45°C to about 65°C.

## Patentansprüche

1. Chemischer Indikator, umfassend:
eine nicht-zellulosehaltige Trägerschicht;
eine nicht-zellulosehaltige Deckschicht, die über der Trägerschicht liegt;
wobei die Trägerschicht und/oder die Deckschicht eine gasdurchlässige Polymerfolie umfassen/umfasst;
ein nicht-zellulosehaltiges Dochtmaterial, das zwischen der Trägerschicht und der Deckschicht positioniert ist, wobei das Dochtmaterial Nylon, Polyethersulfon, Polyvinylidenfluorid, Polytetrafluorethylen oder eine Mischung aus zwei oder mehr davon umfasst;
eine Farbstoffzusammensetzung, die zwischen der Trägerschicht und der Deckschicht positioniert ist und in Kontakt oder nahezu in Kontakt mit dem Dochtmaterial ist, wobei die Farbstoffzusammensetzung einen Indikatorfarbstoff, der in der Gegenwart von Wasserstoffperoxid die Farbe ändert, und ein Basismedium umfasst, das bei einer Temperatur in dem Bereich von etwa 45 °C bis etwa 65 °C schmilzt;
wobei die Deckschicht einen transparenten Abschnitt beinhaltet, um eine Beobachtung des Dochtmaterials zu ermöglichen; und
einen Klebstoff zum Verkleben der Deckschicht mit der Trägerschicht.

2. Chemischer Indikator nach Anspruch 1, wobei die Trägerschicht eine Vertiefung zum Aufnehmen des Dochtmaterials und der Farbstoffzusammensetzung beinhaltet.

3. Chemischer Indikator nach einem der vorhergehenden Ansprüche, wobei die Trägerschicht eine Metallfolie, ein Polyolefin, einen Polyester, ein Polyamid, ein Vinylchloridpolymer, ein Polyacrylat, ein Polycarbonat oder eine Mischung aus zwei oder mehr davon umfasst, wobei die Trägerschicht optional Polyethylen, Polypropylen, Polyethylenterephthalat, Copolymere von Polyethylenterephthalat, Polybutylenterephthalat, Polyvinylchlorid, Polyvinylidenfluorid, Ethylenvinylalkohol, Ethylenvinylacetat, Polychloropren, Polyisopren, Polytetrafluorethylen, Poly(trifluorchlorethylen), Polymethacrylat, Poly(meth)methacrylat, Aluminiumfolie oder eine Mischung aus zwei oder mehr davon umfasst.

4. Chemischer Indikator nach einem der vorhergehenden Ansprüche, wobei die Deckschicht ein Polyolefin, einen Polyester, ein Polyamid, ein Vinylchloridpolymer, ein Polyacrylat, ein Polycarbonat oder eine Mischung aus zwei oder mehr davon umfasst, wobei die Deckschicht optional Polyethylen, Polypropylen, Polyethylenterephthalat, Copolymere von Polyethylenterephthalat, Polybutylenterephthalat, Polyvinylchlorid, Polyvinylidenfluorid, Ethylenvinylalkohol, Ethylenvinylacetat, Polychloropren, Polyisopren, Polytetrafluorethylen, Poly(trifluorchlorethylen), Polymethacrylat, Poly(meth)methacrylat oder eine Mischung aus zwei oder mehr davon umfasst, wobei die Deckschicht optional Polypropylen umfasst.

5. Chemischer Indikator nach einem der vorhergehenden Ansprüche, wobei die Trägerschicht gasdurchlässig ist, um zu ermöglichen, dass Wasserstoffperoxid-Dampf durch die Trägerschicht passiert und das Dochtmaterial kontaktiert, und/oder
wobei die Deckschicht gasdurchlässig ist, um zu ermöglichen, dass Wasserstoffperoxid-Dampf durch die Deckschicht passiert und das Dochtmaterial kontaktiert.

6. Chemischer Indikator nach einem der vorhergehenden Ansprüche, wobei das Basismedium Polyethylenglycol, Polyethylenglycolmonomethylether, einen eutektischen Feststoff, eine ionische Flüssigkeit, ein Wachs, ein thermoplastisches Polymer oder eine Mischung aus zwei oder mehr davon umfasst.

7. Chemischer Indikator nach einem der vorhergehenden Ansprüche, wobei der Indikatorfarbstoff einen Redoxindikator umfasst, der in der Gegenwart von Wasserstoffperoxid reagiert, wobei der Indikatorfarbstoff optional Lissamingrün, Resazurin, Resorufin, Diphenylaminsulfonat, Diphenylamin, Nitrodiphenylamin, Methylorange, Neutralrot, Methylenblau, Kristallviolett, Eisen(II)-phenanthrolin, Thionin oder eine Mischung aus zwei oder mehr davon umfasst.

8. Chemischer Indikator nach einem der vorhergehenden Ansprüche, wobei die Farbstoffzusammensetzung ferner einen Kontrastfarbstoff umfasst.

9. Chemischer Indikator nach Anspruch 8, wobei der Kontrastfarbstoff Phenolrot, Metacresolpurpur, Bromphenolblau, Thymolphthalein, Bromthymolblau, Thymolblau, Bromcresolpurpur, Malachitgrünoxalat oder eine Mischung aus zwei oder mehr davon umfasst.

10. Chemischer Indikator nach einem der vorhergehenden Ansprüche, wobei die Farbstoffzusammensetzung in der Form eines Pellets ist.

11. Chemischer Indikator nach einem der vorhergehenden Ansprüche, wobei das Dochtmaterial eine durchschnittliche Porengröße in dem Bereich von etwa 0,1 bis etwa 5 Mikrometer oder von etwa 0,1 bis etwa 3 Mikrometer oder von etwa 0,1 bis etwa 1 Mikrometer oder von etwa 0,1 bis etwa 0,7 Mikrometer oder von etwa 0,2 bis etwa 0,6 Mikrometer oder von etwa 0,3 bis etwa 0,5 Mikrometer oder von etwa 0,4 bis etwa 0,5 Mikrometer oder etwa 0,45 Mikrometern aufweist.

12. Chemischer Indikator nach einem der vorhergehenden Ansprüche, wobei das Dochtmaterial in der Form eines rechteckigen Streifens oder einer kreisförmigen Schicht ist.

13. Chemischer Indikator nach einem der vorhergehenden Ansprüche, wobei bei einer Exposition des chemischen Indikators gegenüber Wasserstoffperoxid-Dampf bei einer Temperatur in dem Bereich von etwa 45 °C bis etwa 65 °C das Basismedium schmilzt und die Farbstoffzusammensetzung entlang des Dochtstreifens läuft und als Reaktion auf die Exposition gegenüber dem Wasserstoffperoxid-Dampf die Farbe ändert.

14. Chemischer Indikator nach einem der vorhergehenden Ansprüche, wobei der chemische Indikator ein chemischer Indikator mit beweglicher Front ist.

15. Verfahren zum Durchführen eines Sterilisationsverfahrens unter Verwendung von Wasserstoffperoxid-Dampf, umfassend:
Exponieren eines zu sterilisierenden Gegenstands und des chemischen Indikators nach einem der vorhergehenden Ansprüche gegenüber Wasserstoffperoxid-Dampf bei einer Temperatur in dem Bereich von etwa 45 °C bis etwa 65 °C.

## Revendications

1. Indicateur chimique, comprenant :
une couche de support non cellulosique ;
une couche de couverture non cellulosique recouvrant la couche de support ;
la couche de support et/ou la couche de couverture comprenant un film polymère perméable aux gaz ;
un matériau à effet de mèche non cellulosique positionné entre la couche de support et la couche de couverture, dans lequel le matériau à effet de mèche comprend du nylon, du polyéthersulfone, du fluorure de polyvinylidène, du polytétrafluoroéthylène ou un mélange de deux ou plusieurs de ceux-ci ;
une composition de colorant positionnée entre la couche de support et la couche de couverture et en contact ou presque en contact avec le matériau à effet de mèche, la composition de colorant comprenant un colorant indicateur qui change de couleur en présence de peroxyde d'hydrogène, et un milieu de base, qui fond à une température comprise entre environ 45 °C et environ 65 °C ;
la couche de couverture comportant une partie transparente permettant l'observation du matériau à effet de mèche ; et
un adhésif pour coller la couche de couverture à la couche de support.

2. Indicateur chimique selon la revendication 1, dans lequel la couche de support comporte une dépression destinée à recevoir le matériau à effet de mèche et la composition de colorant.

3. Indicateur chimique selon l'une quelconque des revendications précédentes, dans lequel la couche de support comprend une feuille métallique, une polyoléfine, un polyester, un polyamide, un polymère de chlorure de vinyle, un polyacrylate, un polycarbonate ou un mélange de deux ou plusieurs de ceux-ci, éventuellement dans lequel la couche de support comprend du polyéthylène, du polypropylène, du polyéthylène téréphtalate, des copolymères de polyéthylène téréphtalate, du polybutylène téréphtalate, du polychlorure de vinyle, du fluorure de polyvinylidène, de l'alcool éthylène-vinylique, de l'acétate d'éthylène-vinyle, du polychloroprène, du polyisoprène, du polytétrafluoroéthylène, du poly(trifluorochloroéthylène), du polyméthacrylate, du poly(méth)méthacrylate, une feuille d'aluminium ou un mélange de deux ou plusieurs de ceux-ci.

4. Indicateur chimique selon l'une quelconque des revendications précédentes, dans lequel la couche de couverture comprend une polyoléfine, un polyester, un polyamide, un polymère de chlorure de vinyle, un polyacrylate, un polycarbonate ou un mélange de deux ou plusieurs de ceux-ci, éventuellement dans lequel la couche de couverture comprend du polyéthylène, du polypropylène, du polyéthylène téréphtalate, des copolymères de polyéthylène téréphtalate, du polybutylène téréphtalate, du polychlorure de vinyle, du fluorure de polyvinylidène, de l'alcool éthylène-vinylique, de l'acétate d'éthylène-vinyle, du polychloroprène, du polyisoprène, du polytétrafluoroéthylène, du poly(trifluorochloroéthylène), du polyméthacrylate, du poly(méth)méthacrylate, ou un mélange de deux ou plusieurs de ceux-ci, éventuellement dans lequel la couche de couverture comprend du polypropylène.

5. Indicateur chimique selon l'une quelconque des revendications précédentes, dans lequel la couche de support est perméable aux gaz pour permettre au peroxyde d'hydrogène vaporeux de traverser la couche de support et d'entrer en contact avec le matériau à effet de mèche, et/ou
dans lequel la couche de couverture est perméable aux gaz pour permettre au peroxyde d'hydrogène vaporeux de traverser la couche de couverture et d'entrer en contact avec le matériau à effet de mèche.

6. Indicateur chimique selon l'une quelconque des revendications précédentes, dans lequel le milieu de base comprend du polyéthylène glycol, du monométhyléther de polyéthylène glycol, un solide eutectique, un liquide ionique, une cire, un polymère thermoplastique ou un mélange de deux ou plusieurs de ceux-ci.

7. Indicateur chimique selon l'une quelconque des revendications précédentes, dans lequel le colorant indicateur comprend un indicateur redox qui réagit en présence de peroxyde d'hydrogène, éventuellement dans lequel le colorant indicateur comprend du vert de lissamine, de la résazurine, de la résorufine, du sulfonate de diphénylamine, de la diphénylamine, de la nitrodiphénylamine, de l'orange de méthyle, du rouge neutre, du bleu de méthylène, du violet de cristal, de la phénanthroline de fer(II), de la thionine ou un mélange de deux ou plusieurs de ceux-ci.

8. Indicateur chimique selon l'une quelconque des revendications précédentes, dans lequel la composition de colorant comprend également un colorant de contraste.

9. Indicateur chimique selon la revendication 8, dans lequel le colorant de contraste comprend du rouge de phénol, du pourpre de métacrésol, du bleu de bromophénol, de la thymolphtaléine, du bleu de bromothymol, du bleu de thymol, du pourpre de bromocrésol, de l'oxalate de vert malachite, ou un mélange de deux ou plusieurs de ceux-ci.

10. Indicateur chimique selon l'une quelconque des revendications précédentes, dans lequel la composition de colorant se présente sous la forme d'une pastille.

11. Indicateur chimique selon l'une quelconque des revendications précédentes, dans lequel le matériau à effet de mèche présente une taille de pore moyenne comprise entre environ 0,1 et environ 5 micromètres, ou entre environ 0,1 et environ 3 micromètres, ou entre environ 0,1 et environ 1 micromètre, ou entre environ 0,1 et environ 0,7 micromètre, ou entre environ 0,2 et environ 0,6 micromètre, ou entre environ 0,3 et environ 0,5 micromètre, ou entre environ 0,4 et environ 0,5 micromètre, ou à environ 0,45 micromètre.

12. Indicateur chimique selon l'une quelconque des revendications précédentes, dans lequel le matériau à effet de mèche se présente sous la forme d'une bande rectangulaire ou d'une couche circulaire.

13. Indicateur chimique selon l'une quelconque des revendications précédentes, dans lequel, lors de l'exposition de l'indicateur chimique au peroxyde d'hydrogène vaporeux à une température comprise entre environ 45 °C et environ 65 °C, le milieu de base fond et la composition de colorant migre le long de la bande à effet de mèche et change de couleur en réponse à l'exposition au peroxyde d'hydrogène vaporeux.

14. Indicateur chimique selon l'une quelconque des revendications précédentes, dans lequel l'indicateur chimique est un indicateur chimique à front mobile.

15. Procédé pour effectuer une stérilisation à l'aide de peroxyde d'hydrogène vaporeux, comprenant :
l'exposition d'un article à stériliser et de l'indicateur chimique selon l'une des revendications précédentes à du peroxyde d'hydrogène vaporeux à une température comprise entre environ 45 °C et environ 65 °C.
